(19) Europäisches Patentamt
European Patent Office
Office européen des brevets

(11) **EP 2 824 529 B1**

(12) **FASCICULE DE BREVET EUROPEEN**

(45) Date de publication et mention
de la délivrance du brevet:
**08.08.2018 Bulletin 2018/32**

(51) Int Cl.:
***G05D 1/04*** *(2006.01)*     ***B64C 27/57*** *(2006.01)*
***B64D 45/04*** *(2006.01)*     ***B64C 27/56*** *(2006.01)*
***G08G 5/00*** *(2006.01)*     ***G08G 5/04*** *(2006.01)*

(21) Numéro de dépôt: **14002160.1**

(22) Date de dépôt: **24.06.2014**

(54) **Procédé et dispositif d'émission d'alertes pour l'évitement de terrain par un aéronef à voiture tournante**

Verfahren und Vorrichtung zur Ausgabe von Warnmeldungen zum Vermeiden eines Terrains durch ein Luftfahrzeug mit Drehfahrwerk

Method and device for emitting terrain avoidance warnings for a rotorcraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2013 FR 1301635**

(43) Date de publication de la demande:
**14.01.2015 Bulletin 2015/03**

(73) Titulaire: **Airbus Helicopters**
**13725 Marignane Cedex (FR)**

(72) Inventeur: **Petillon, Jean-Paul**
**13140 Miramas (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**US-A1- 2002 030 610     US-A1- 2011 125 346**
**US-A1- 2011 234 425**

EP 2 824 529 B1

## Description

La présente invention se rapporte au domaine technique général des aides au pilotage d'aéronefs à voilure tournante et en particulier aux domaines des alertes pour l'évitement d'obstacles. La présente invention concerne plus particulièrement un procédé d'émission d'une alerte pour l'évitement de terrain par un aéronef à voilure tournante ainsi qu'un dispositif mettant en oeuvre ce procédé et qu'un aéronef disposant d'un tel dispositif.

De tels systèmes d'aide au pilotage par alerte pour l'évitement de terrain sont connus sous l'acronyme en langue anglaise « *TAWS* » pour « Terrain Avoidance Warning System ».

Ces systèmes *TAWS* permettent d'indiquer, au fur et à mesure de leur rapprochement, les obstacles dangereux et le relief situés en avant de la trajectoire de l'aéronef. Ces systèmes *TAWS* comportent notamment une fonction d'évitement du relief survolé désignée par l'acronyme en langue anglaise « *FLTA* » pour « Forward-Looking Terrain Avoidance ». Ces systèmes *TAWS* permettent ainsi, grâce à cette fonction *FLTA,* d'éviter par exemple qu'un avion ne s'écrase au sol sans que le pilote aux commandes en ait perdu le contrôle, par exemple à la suite d'une erreur de navigation ou encore par méconnaissance de la hauteur du relief survolé ou des obstacles éventuels. Un tel accident peut être désigné par l'acronyme en langue anglaise « *CFIT* » pour « Controlled Flight Into Terrain ».

Un tel système permet ainsi de produire automatiquement des alertes en fonction de bases de données du relief et des obstacles éventuels survolés ainsi qu'éventuellement une trajectoire d'évitement lorsque la trajectoire de l'aéronef interfère avec le relief ou bien un obstacle.

Un autre système désigné sous l'acronyme « *GPWS* » en langue anglaise pour « Ground Proximity Warning Systems », permet d'alerter le pilote de l'aéronef de la proximité du sol.

L'ensemble de ces systèmes a été conçu principalement pour les avions et n'est pas adapté, ni satisfaisant pour les aéronefs à voilure tournante. En effet, un aéronef à voilure tournante est capable d'effectuer de nombreux types de vols différents, en comparaison avec un aéronef à voilure fixe tel qu'un avion. Seuls les vols de croisière sont réellement comparables avec des vols d'avions. En effet, un aéronef à voilure tournante peut notamment effectuer des vols stationnaires et des vols uniquement verticaux ou latéraux ainsi que voler de manière prolongée très près du sol et des obstacles.

Lors de tels vols, les paramètres pris en considération et les alertes fournies par un système d'évitement de terrain prévu pour un avion, sont alors inappropriés, voire indésirables pour les aéronefs à voilure tournante, et peuvent constituer une nuisance pour le pilote.

En outre, les organes de pilotage d'un aéronef à voilure tournante étant fondamentalement différents de ceux d'un avion, l'exécution d'une manoeuvre d'évitement requière des actions de pilotage spécifiques, autres que celles des avions.

Face à ce constat, des systèmes d'aide au pilotage par alerte pour l'évitement de terrain ont été adaptés pour les aéronefs à voilure tournante et sont connus sous l'acronyme en langue anglaise « *HTAWS* » pour « Helicopter Terrain Avoidance Warning System ».

Le document FR2773609 décrit un procédé anticollision d'un aéronef avec le relief survolé pouvant déterminer une nappe de trajectoires possibles de l'aéronef ainsi que deux trajectoires d'évitement selon des manoeuvres connues. Un contour peut alors être obtenu et est représenté par l'intersection du relief et d'une part des trajectoires possibles de l'aéronef et d'autre part d'une ou des deux trajectoires d'évitement. En outre, ce contour et ces trajectoires peuvent être affichés sur un moyen de visualisation, des marquages de couleur étant représentatifs des risques de collision de l'aéronef avec le relief.

On connaît également le document US6380870 qui permet de déterminer une distance d'analyse de l'environnement et du relief survolé par un aéronef pour un système d'alerte de proximité du relief. Cette distance d'analyse est variable. Ce temps de réaction est le produit d'un temps de réaction de l'équipage et de la vitesse d'avancement de cet aéronef en dessous d'une vitesse de croisière prédéterminée de l'aéronef et est constant au dessus de cette vitesse prédéterminée afin de limiter les alertes parasites notamment à faible vitesse d'avancement.

Selon le document FR2813963, un risque de collision entre un aéronef et le relief survolé est établi en fonction de paramètres statiques et dynamiques de cet aéronef et d'au moins une base de données du relief survolé. Un moyen de visualisation permet d'afficher une représentation de ce relief, de l'éventuelle alerte et des informations d'évitement de cette collision. Par ailleurs, des phases de décollage et d'atterrissage sont prises en compte afin d'inhiber d'éventuelles alertes inappropriées.

De plus, le document US6906641 décrit un système d'alerte de proximité du relief définissant deux enveloppes de vol d'un aéronef afin d'améliorer la génération des alertes. Une première enveloppe est fonction de la trajectoire de l'aéronef, de la distance avec le relief, de l'altitude et du relief alors que la seconde enveloppe est fonction uniquement de la trajectoire et de la distance avec le relief.

Par ailleurs, le document US6583733 décrit un système d'alerte de proximité du relief pour hélicoptère, avec deux modes de fonctionnement. Chaque mode est sélectionné par le pilote et permet d'adapter le système aux conditions de vol, telles que l'altitude. La détection du relief peut ainsi être améliorée et le taux de nuisances dû aux alertes inappropriées peu être réduit.

Selon le document US6833797, un procédé permet d'afficher sur un moyen de visualisation la proximité du relief par l'intermédiaire de codes couleurs en fonction de la distance de l'aéronef et de sa vitesse d'avancement. La phase de vol de l'aéronef est également prise en compte afin d'éviter, notamment en phase d'atterrissage, le déclenchement intempestif d'alertes inappropriées de proximité du relief.

De plus, le document US6683556 décrit un procédé permettant de déterminer la position et la direction d'un aéronef par rapport au relief ou un obstacle au sol. Ce procédé permet notamment de déterminer la hauteur de cet aéronef vis-à-vis de cet obstacle ou du relief et d'afficher par l'intermédiaire de codes couleurs cette hauteur sur un moyen de visualisation.

Le document FR2870604 décrit un procédé de sécurisation d'un vol d'un aéronef à basse altitude. Ce procédé surveille la compatibilité de la trajectoire de l'aéronef avec le relief survolé selon les conditions de vol de l'aéronef et en respectant sa manoeuvrabilité, notamment son facteur de charge en virage latéral et vertical. Une trajectoire d'évitement vertical du relief peut être déterminée et comprend par exemple une ressource à facteur de charge et rayon constants.

On connait également le document EP1907911 qui décrit un procédé de détection d'un risque de collision d'un aéronef avec le relief survolé au cours duquel une trajectoire d'évitement de ce relief est déterminée. Cette trajectoire d'évitement est déterminée en prenant en compte le transfert d'énergie de l'aéronef lors de cette manoeuvre d'évitement ainsi que la variation de vitesse de l'aéronef.

Le document WO2007/054448 décrit un système d'alerte du franchissement d'un point limite par un aéronef. Ce point limite correspond au dernier point de la trajectoire de l'aéronef permettant la réussite d'une manoeuvre d'évitement standard prédéfinie du relief, cette manoeuvre d'évitement étant fonction de la masse, de l'inertie et de la configuration de l'aéronef.

Selon le document US7363121, un système d'alerte de proximité du relief pour un aéronef charge d'une mémoire des données spatiales relatives au relief survolé par cet aéronef en suivant un ordre de priorité prédéterminé dans le but de fournir plus rapidement les alertes au pilote. Cet ordre de priorité prédéterminé est fonction de la position et de la trajectoire de l'aéronef.

Le document FR2932919 décrit un système d'alerte de terrain pour un aéronef à voilure tournante avec le relief en prenant en compte notamment la manoeuvrabilité instantanée de cet aéronef, notamment son accélération verticale et sa masse instantanés. Une trajectoire d'évitement est alors élaborée et est constituée par un tronçon proximal, sensiblement rectiligne, significatif d'un temps de transfert ainsi qu'au moins un tronçon distal de profil conique.

En outre, le document US2011/0125346 décrit un procédé définissant des enveloppes de protection d'un aéronef attachées respectivement à différents régimes de vol prédéterminés de cet aéronef à partir d'une pluralité de paramètres de l'aéronef. Ensuite, une enveloppe de protection est choisie en fonction du régime de vol courant de l'aéronef.

Enfin, on connaît le document « Design and Implementation of Taws for Rotary Wing Aircraft », de T Anderson présenté le 5 mars 2011 à l'« Aerospace Conférence IEEE » ainsi que le document US2010/106419 comme faisant parti de l'arrière plan technologique.

La fonction d'émission d'une alerte pour l'évitement de terrain par un aéronef est donc généralement fondée sur une comparaison en temps réel entre une trajectoire de vol prédite de cet aéronef ou bien une enveloppe d'une trajectoire de vol prédite et des modèles représentant le relief et d'éventuels obstacles. Cette trajectoire prédite peut être associée à une ou plusieurs manoeuvres d'évitement prédéterminées afin de déterminer un point limite correspondant au dernier point de la trajectoire prédite à partir duquel une telle manoeuvre d'évitement prédéterminée permet à l'aéronef d'éviter avec une marge de sécurité suffisante la collision avec le relief ou l'obstacle. Ce point limite est généralement désigné par l'expression « point de référence verticale » ou bien par l'acronyme « *VRP* » en langue anglaise pour « Vertical Reference Point ».

Cette fonction permet la réalisation d'une trajectoire de vol de l'aéronef la plus proche possible du relief et de donner des alertes appropriées de manière à lui permettre de réaliser en temps opportun une manoeuvre d'évitement convenable afin d'éviter la collision.

Cette fonction d'émission d'une alerte pour l'évitement de terrain par un aéronef peut fonctionner pendant toutes les phases de vol de l'aéronef, en prenant en compte des paramètres courant de l'aéronef. La connaissance de l'environnement survolé par l'aéronef est obtenue à partir de bases de données du relief et des obstacles éventuels.

On comprend néanmoins que la variété des trajectoires possibles d'un aéronef à voilure tournante près du relief et des obstacles rend difficile la réalisation d'une telle fonction d'émission d'une alerte pour l'évitement de terrain pour ce type d'aéronefs. En effet, l'alerte doit être donnée de manière appropriée afin de laisser le temps au pilote de réaliser la manoeuvre d'évitement. Cependant, une définition trop approximative de la trajectoire d'évitement peut donner lieu à des alertes intempestives et inappropriées incitant alors le pilote à désactiver le système au lieu de lui faire confiance et de l'utiliser.

Une telle fonction d'émission d'une alerte pour l'évitement de terrain par un aéronef à voilure tournante doit donc générer des alertes à la fois au moment opportun, tout en demeurant fiables et sécuritaires en termes de possibilités d'évitement du relief.

La définition d'une manoeuvre d'évitement réaliste, optimale et adaptée à l'aéronef est donc déterminante pour assurer la fiabilité et l'efficacité de cette fonction. Toutefois, pour chaque modèle d'aéronef à voilure tournante, la manoeuvrabilité varie de manière non négligeable du fait de diverses situations.

Notamment, la manoeuvrabilité d'un aéronef à voilure tournante évolue en fonction de nombreux paramètres dont :

- ses caractéristiques intrinsèques, telles que sa puissance motrice installée, ses caractéristiques aérodynamiques ou sa configuration par exemple,

- son environnement de vol, tel que la densité de l'air actuelle,

- ses états et ses paramètres de fonctionnement courant, tels que la masse instantanée, la puissance motrice courante disponible par exemple.

Un des objectifs de la fonction d'émission d'une alerte pour l'évitement de terrain par un aéronef selon l'invention est alors de définir au moins une trajectoire d'évitement possible pour l'aéronef d'une part minimisant les fausses alertes et d'autre part qui soit la plus réaliste vis-à-vis de manoeuvres d'évitement réelles réalisables et adaptées à cet aéronef, tout en prenant en compte ses caractéristiques, ses performances effectives et ses états courants. Notamment ces manoeuvres d'évitement doivent être adaptées au cas particulier des vitesses d'avancement élevées en vol de croisière.

L'emploi d'un algorithme de prédiction de trajectoires et l'utilisation des bases de données du relief et des obstacles éventuels est nécessaire pour s'assurer d'une part qu'une protection adéquate est assurée en présence de reliefs très escarpés y compris des falaises et d'autre part que des trajectoires de l'aéronef qui croisent en toute sécurité ces reliefs pouvant s'élever à pic ne provoquent pas d'alertes intempestives.

Un objet de l'invention est un procédé d'émission d'une alerte pour l'évitement de terrain par un aéronef à voilure tournante au cours duquel :

- on élabore au moins une nappe de trajectoires d'évitement possibles de l'aéronef, ces trajectoires d'évitement étant déterminées par un objectif d'évitement du relief survolé ou bien d'un obstacle éventuel,
- on déclenche une alerte dès qu'une nappe de ces trajectoires d'évitement possibles se trouve à une distance du relief ou bien d'un obstacle éventuel qui est inférieure à une distance prédéterminée.

Cette distance prédéterminée correspond à une marge prise en compte entre les nappes de trajectoires d'évitement et le relief ou l'obstacle éventuel pour garantir le survol du relief ou de l'obstacle éventuel par l'aéronef en sécurité.

De plus, ce procédé d'émission d'une alerte pour l'évitement de terrain est exécuté de façon répétitive et cyclique afin de prendre en compte l'avancement de l'aéronef vis-à-vis du relief et des obstacles éventuels ainsi que l'évolution de sa trajectoire.

Ce procédé est remarquable en ce que chaque nappe de trajectoires d'évitement possible est déterminée à partir d'une manoeuvre d'évitement prédéterminée et des états courants de l'aéronef et comporte :

- une phase de décélération jusqu'à une vitesse d'avancement prédéterminée, la phase de décélération étant obtenue par une prise d'une assiette à cabrer prédéterminée de l'aéronef et réalisée à une puissance maximale prédéterminée de l'aéronef,

- une phase finale de montée de l'aéronef pendant laquelle la vitesse d'avancement de l'aéronef est maintenue égale à cette vitesse d'avancement prédéterminée et la puissance des moteurs est maintenue égale à cette puissance maximale prédéterminée.

De plus, ce procédé peut comporter une phase initiale de remise en vol rectiligne de l'aéronef réalisée avant la phase de décélération. Cette phase initiale est notamment nécessaire lorsque l'aéronef a un taux de virage non nul quand la trajectoire d'évitement doit être réalisée.

Une trajectoire nominale d'évitement de l'aéronef est notamment élaborée dans la continuité de la trajectoire courante de l'aéronef et se situant à l'avant de la position courante de l'aéronef. Ensuite, un continuum de trajectoires d'évitement s'étend horizontalement de part et d'autre de la trajectoire nominale d'évitement afin de prendre en compte une incertitude latérale de trajectoire de l'aéronef. On entend par continuum de trajectoires d'évitement un ensemble continu de trajectoires d'évitement que peut prendre l'aéronef. Ce continuum de trajectoires d'évitement forme ainsi avec la trajectoire nominale d'évitement une nappe de trajectoires d'évitement. On utilise également, dans le domaine aéronautique, le terme de « palpeur » pour désigner une telle nappe projetée à l'avant de l'aéronef.

Le procédé selon l'invention peut élaborer plusieurs nappes de trajectoires d'évitement, un ou plusieurs paramètres de l'aéronef, de la réaction du pilote, ou bien de l'élaboration de la trajectoire nominale d'évitement étant modifiés pour chaque nappe.

Par exemple, à chaque nappe peut correspondre un temps de réaction du pilote différent pour la réalisation de la manoeuvre d'évitement, le temps de réaction du pilote étant le temps entre l'instant de déclenchement de l'alarme et le début d'exécution de la manoeuvre d'évitement.

Chaque trajectoire d'évitement de l'aéronef est généralement obtenue par l'intermédiaire d'un algorithme de prédiction de trajectoire et est totalement indépendante d'un système de navigation que peut comporter l'aéronef. Cet algorithme peut estimer les états futurs de l'aéronef durant un laps de temps futur convenable en fonction des états courants de cet aéronef. Ces états courants et futurs de l'aéronef comportent au moins la position, l'altitude et la vitesse d'avancement, aussi bien en module qu'en direction, de l'aéronef ainsi que sa vitesse verticale. Des caractéristiques extérieures à l'aéronef telles que la direction et la vitesse du vent peuvent avantageusement être prises en compte pour l'élaboration d'une trajectoire d'évitement.

Le laps de temps futur convenable pendant lequel les états futurs de l'aéronef doivent être estimés dépend essentiellement du relief survolé par l'aéronef et plus précisément de la hauteur de ce relief ou bien de l'obstacle à éviter. Ce laps de temps futur peut donc être variable.

De préférence, ce laps de temps futur est constant afin d'uniformiser le temps de calcul du procédé selon l'invention. Ce laps de temps futur doit alors être suffisant pour prendre en compte le pire cas que peut rencontrer l'aéronef. Ce pire cas correspondant au pire dénivelé que peut rencontrer l'aéronef et à la distance nécessaire pour le franchir. Cette distance de franchissement du relief à éviter est donc également une valeur constante.

Par exemple, pour éviter un relief de 3000 mètres (3000m), un aéronef volant à une vitesse d'avancement de 40 mètres par seconde (40m/s) avec une capacité de montée à une vitesse verticale de 15m/s a besoin de 200 secondes (200s), soit plus de 3 minutes. Le laps de temps futur pendant lequel les états futurs de l'aéronef doivent être estimés est alors d'au moins 200s et la longueur de la nappe de trajectoires d'évitement est de l'ordre de 8000m.

De plus, ce procédé d'émission d'une alerte pour l'évitement de terrain est exécuté de façon répétitive. Idéalement, la fréquence d'exécution de ce procédé est élevée afin de procurer un effet « lisse » et continu pour l'établissement des nappes de trajectoires d'évitement.

Cependant, afin de limiter le temps de calcul lié à ce procédé tout en prenant en compte une distance de franchissement du relief suffisante, la fréquence d'exécution de ce procédé est de préférence comprise entre de 5 à 50 Hertz (5 à 50Hz). Cette fréquence peut également être une fréquence variable, notamment fonction de la distance de franchissement du relief à éviter. Par exemple, cette fréquence diminue lorsque cette distance de franchissement du relief à éviter augmente.

De préférence, cette fréquence d'exécution de ce procédé est une fréquence constante.

Les états futurs de l'aéronef sont avantageusement estimés, pour les premières secondes suivant l'instant courant, à l'aide des états passés de l'aéronef sur une période de temps antérieure à l'instant courant. C'est par exemple le cas lorsque le taux de virage courant de l'aéronef est non nul, pour la réalisation de la phase initiale. L'algorithme de prédiction de trajectoire peut ainsi estimer un temps de réaction de l'aéronef pour terminer ce virage avant d'exécuter un vol rectiligne, c'est-à-dire pour exécuter la phase initiale. Cette période de temps antérieure à l'instant courant est constituée par exemple par les 5 ou 7 secondes (5 ou 7s) précédant cet instant courant.

La trajectoire d'évitement est montante pour s'écarter du relief et des obstacles. Elle correspond à la trajectoire permettant le plus fort gain d'altitude, compte tenu de l'état initial et des caractéristiques de l'aéronef.

Pour garantir le survol du relief en sécurité, une marge est prise en compte entre la trajectoire d'évitement et le relief ou l'obstacle éventuel. Cette marge dépend notamment des incertitudes dans la mesure de la position de l'aéronef d'une part, et dans les altitudes lues dans la base de données du relief et des obstacles. Par exemple, cette marge est de 100 à 200 pieds (100 ou 200ft), c'est-à-dire 30 à 60m, 1ft étant égal à 0.3048m.

Pour simplifier les calculs mis en oeuvre par le procédé selon l'invention, cette marge est avantageusement orientée selon une direction purement verticale.

Chaque trajectoire d'évitement doit être adaptée à l'aéronef en respectant ses capacités et sa manoeuvrabilité. De plus, chaque trajectoire d'évitement doit requérir un facteur de charge vertical et une assiette longitudinale plus élevés que celui qui serait adopté par le pilote de l'aéronef si la situation de l'aéronef n'était pas dangereuse.

Chaque trajectoire d'évitement est basée sur l'hypothèse d'une manoeuvre d'évitement décomposée selon les phases suivantes :

- une phase préliminaire pendant laquelle le pilote ne réagit pas encore, et donc pendant laquelle la trajectoire est le pur prolongement de la trajectoire courante,

- éventuellement une phase initiale de remise en vol rectiligne de l'aéronef, cette phase étant nécessaire lorsque l'aéronef possède un taux de virage non nul au démarrage de la manoeuvre d'évitement,

- une phase de décélération jusqu'à une vitesse d'avancement prédéterminée $Va_{finale}$, la phase de décélération étant réalisée par une prise d'une assiette à cabrer prédéterminée de l'aéronef et à une puissance maximale prédéterminée de l'aéronef,

- une phase finale de montée de l'aéronef à cette vitesse d'avancement prédéterminée $Va_{finale}$ et réalisée à la puissance maximale prédéterminée de l'aéronef.

Comme évoqué précédemment, la phase initiale de remise en vol rectiligne n'est pas réalisée systématiquement. Elle n'est pas nécessaire quand l'aéronef est déjà en vol rectiligne.

Une telle manoeuvre d'évitement peut être définie par le fabricant de l'aéronef, et principalement la phase de décélération et la phase finale de montée. Cette manoeuvre d'évitement est de plus décrite dans le manuel de vol de l'aéronef et les pilotes amenés à piloter cet aéronef peuvent avantageusement être entrainés à exécuter cette manoeuvre d'évitement.

Ensuite, la phase de décélération et la phase finale sont réalisées à une puissance maximale prédéterminée de l'aéronef. Ainsi, la puissance disponible pour ces phases est limitée afin notamment d'éviter d'endommager les moteurs de l'aéronef. Le pilote de l'aéronef utilise avantageusement un Indicateur de Première Limitation désigné par l'acronyme « IPL » afin de contrôler, pendant ces phases de décélération et de montée, la puissance développée par les moteurs de l'aéronef.

Cette puissance maximale prédéterminée peut par exemple être la Puissance Maximale Continue (*PMC*) ou bien la Puissance Maximale de Décollage (*PMD*) de l'aéronef. La Puissance Maximale Continue (*PMC*) est la puissance maximale que peut fournir de façon continue l'ensemble de la chaîne motrice de l'aéronef sans endommagement de cette chaîne motrice, alors que la Puissance Maximale de Décollage (*PMD*) est la puissance maximale que peut fournir pendant un temps limité, par exemple 5 minutes, la chaîne motrice de l'aéronef sans dommage. On entend par chaîne motrice l'ensemble des éléments moteurs et de transmission mécanique, comprenant notamment les moteurs, la boîte de transmission principale de puissance et les arbres de transmission.

De préférence, cette puissance maximale prédéterminée est la Puissance maximale Continue (*PMC*) de l'aéronef.

Cette puissance maximale prédéterminée peut également être un paramètre pour élaborer différentes nappes de trajectoires d'évitement possibles.

Par exemple, une première nappe de trajectoires d'évitement possibles correspond à la Puissance Maximale Continue (*PMC*) de l'aéronef et une seconde nappe correspond à la Puissance Maximale de Décollage (*PMD*). Ainsi, en fonction de l'alerte fournie par le procédé selon l'invention, le pilote de l'aéronef sait s'il doit utiliser la Puissance Maximale Continue (*PMC*) ou bien la Puissance Maximale de Décollage (*PMD*).

Par ailleurs, la vitesse d'avancement prédéterminée $Va_{finale}$ peut avantageusement correspondre à un point de fonctionnement particulier et connu de l'aéronef, nommé $V_Y$, pour lequel la puissance nécessaire pour l'avancement de l'aéronef est minimale. Par suite, la puissance disponible pour que l'aéronef monte est maximale. Ainsi, le choix de cette vitesse d'avancement $V_Y$ permet le taux de montée de l'aéronef le plus élevé.

Cette vitesse d'avancement $V_Y$ de montée optimale est sensiblement constante pour un aéronef à voilure tournante donné, de l'ordre de 65 à 80 noeuds (65 à 80Kt).

Il est cependant envisageable que cette vitesse d'avancement prédéterminée $Va_{finale}$ soit calculée par le procédé selon l'invention en fonction des conditions courantes de l'aéronef et de son environnement.

De plus, la phase de décélération est réalisée avec une assiette à cabrer prédéterminée de l'aéronef. Cette prise d'assiette permet ainsi d'augmenter la capacité de montée de l'aéronef. Cette phase de décélération est importante, notamment dans le cas d'un vol de croisière à vitesse d'avancement élevée.

Lors de cette phase de décélération, l'assiette à cabrer prédéterminée de l'aéronef peut être comprise par exemple entre 10 et 25 degrés (10 et 25°) par rapport à un plan horizontal. Cette assiette à cabrer prédéterminée permet d'avoir une phase de décélération plus forte que les décélérations utilisées lors d'une phase de vol traditionnelle, sans pour autant devenir inquiétante pour les passagers de l'aéronef. De préférence, cette assiette à cabrer est constante et est par exemple de 15°.

Cette assiette à cabrer prédéterminée peut également avoir été déterminée par le fabriquant de l'aéronef et est alors indiquée dans le manuel de vol de l'aéronef.

La phase de décélération est réalisée notamment à l'aide d'un manche cyclique de l'aéronef à voilure tournante, ce manche cyclique pilotant le pas cyclique des pales du rotor principal de cet aéronef. Une action sur ce manche cyclique permet de cabrer l'aéronef et ainsi de le ralentir et de transformer une partie de son énergie cinétique en énergie potentielle. Cette phase de décélération permet donc dans un premier temps de gagner de l'altitude « gratuitement » sans solliciter de façon supplémentaire les moteurs et d'augmenter la vitesse verticale de l'aéronef.

En outre, avantageusement, la manoeuvre d'évitement prédéterminée est basée sur une action du pilote sur un manche collectif de l'aéronef, dès la phase de décélération, afin d'augmenter le pas collectif des pales du rotor principal de l'aéronef à voilure tournante, contrairement aux manoeuvres habituelles de décélération en palier dans lesquelles le pas collectif doit être diminué. De la sorte, le pilote peut, en tirant le manche collectif et en s'aidant également d'un instrument de l'aéronef tel que l'Indicateur de Première Limitation (IPL), contrôler la puissance développée par les moteurs de l'aéronef. Ainsi, le pilote peut réguler cette puissance développée par les moteurs de l'aéronef à une valeur sensiblement égale à la puissance maximale prédéterminée, disposant alors d'une puissance importante sans risque d'endommager les moteurs.

De préférence, le pilote agit simultanément sur le manche cyclique et le manche collectif afin de piloter d'une part le tangage de l'aéronef et d'autre part la puissance mécanique développée par la chaîne motrice de l'aéronef. Ainsi, l'aéronef peut atteindre la vitesse d'avancement prédéterminée $Va_{finale}$ tout en maintenant la puissance des moteurs à la puissance maximale prédéterminée maximisant ainsi le taux de montée de l'aéronef.

Chaque vitesse d'avancement $Va$ de l'aéronef est notamment caractérisée par une capacité de vitesse verticale Vv déterminée par une formule $Vv = Vv_S\left(V_a, M_a, P_S, T_S, E_S\right) + GS\dfrac{\gamma_H}{g}$ , $Vv_S(V_a, M_a, P_S, T_S, E_S)$ correspondant à une composante statique $Vv_{STAT}$ de cette vitesse verticale $Vv$, et $GS\dfrac{\gamma_H}{g}$ correspondant à une composante dynamique $Vv_{DYN}$ de cette vitesse verticale $Vv$.

Selon un mode de réalisation préféré de l'invention, la composante statique $Vv_{STAT}$ peut être calculée à partir d'une table utilisée par le procédé, les éléments de la table ayant été obtenus à partir des abaques du manuel de vol de l'aéronef. Cette composante statique $Vv_{STAT}$ est fonction de paramètres atmosphériques et de fonctionnement et des états de l'aéronef. Ces abaques sont approuvés par les autorités de certification. Avantageusement, une interpolation linéaire entre les points de la table est effectuée pour obtenir la composante statique $Vv_{STAT}$ de cette vitesse verticale $Vv$. Ainsi, l'algorithme permettant de déterminer la composante statique $Vv_{STAT}$ repose sur des données certifiées du manuel de vol. De fait, aucun essai complémentaire n'est nécessaire pour valider cet algorithme qui peut aisément être certifié.

Selon un autre mode de réalisation de l'invention, une mise en équation(s) des abaques du manuel de vol peut être utilisée pour déterminer la composante statique $Vv_{STAT}$ en fonction de paramètres atmosphériques et de fonctionnement de l'aéronef ainsi que de ses états. Cette composante statique $Vv_{STAT}$ peut également être déterminée à partir d'un simulateur d'aéronef ayant notamment pour données d'entrées les paramètres atmosphériques et de fonctionnement de l'aéronef ainsi que ses états.

Les paramètres atmosphériques caractérisent l'air entourant l'aéronef et comportent par exemple la pression statique $Ps$ et la température statique $Ts$ autour de l'aéronef.

Les états de l'aéronef comportent par exemple la masse instantanée de l'aéronef $M$, sa vitesse d'avancement $Va$ par rapport à l'air, sa vitesse d'avancement $GS$ par rapport au sol, son accélération horizontale $\gamma_H$. On entend par masse instantanée de l'aéronef $M$, sa masse à l'instant courant, c'est-à-dire en prenant notamment en compte les charges transportées par l'aéronef ainsi que le carburant consommé depuis le début de son vol. *En outre,* de préférence, on corrige la masse instantanée pour la transformer en masse apparente de l'aéronef $M_a$ telle que

$$M_a = M\frac{\sqrt{g^2 + \gamma_H{}^2}}{g}\text{ ,}$$ $g$ étant l'accélération de la gravité terrestre.

Les paramètres de fonctionnement de l'aéronef peuvent être la configuration de l'aéronef, l'état de vieillissement et/ou de fonctionnement de ses moteurs, l'état rentré ou bien sorti de son train d'atterrissage. Ces paramètres de fonctionnement de l'aéronef peuvent notamment être fournis par des équipements de vol existants et classiques, par exemple par un calculateur d'Indicateur de Première Limitation ou bien un calculateur moteur désigné par l'acronyme « *FADEC* » en langue anglaise pour « Full Authority Digital Engine Control ».

Un paramètre de fonctionnement de l'aéronef peut plus particulièrement être un paramètre booléen $E_s$ caractérisant le mode de fonctionnement des moteurs, c'est-à-dire si un seul moteur ou bien deux moteurs fonctionnent. Ces modes de fonctionnement des moteurs sont désignés par les acronymes « OEI » et « AEO » en langue anglaise pour respectivement « One Engine Inoperative » et « All Engines Operative ». Ce paramètre booléen $E_s$ est très influant sur la forme de la trajectoire d'évitement.

De plus, le vieillissement des moteurs peut être pris en compte dès l'établissement de la table permettant de déterminer la valeur de la composante statique $Vv_{STAT}$. En effet, lors de la certification d'un aéronef, des abaques fournissant les performances des moteurs sont certifiés pour des moteurs vieillis ou identifiés au cours d'un contrôle santé moteur. De fait, on peut soit utiliser directement les abaques des performances des moteurs vieillis, soit utiliser les abaques des performances des moteurs neufs et ajouter un paramètre de fonctionnement moteurs caractérisant leur état de vieillissement.

Ces états courants et ces paramètres de fonctionnement de l'aéronef permettent ainsi de prendre en compte les caractéristiques et les performances effectives courantes de cet aéronef, impactant en particulier sa manoeuvrabilité.

La composante dynamique $Vv_{DYN}$ est quant à elle basée sur la composante horizontale de la vitesse d'avancement $GS$ de l'aéronef par rapport au sol et sur l'inclinaison de l'horizontale apparente de l'aéronef. En effet, cette l'inclinaison de l'horizontale apparente $\theta$ de l'aéronef est selon la relation $tan(\theta) = \dfrac{\gamma_H}{g}$, $tan(\theta)$ étant la fonction trigonométrique tangente de l'angle $\theta$, $\gamma_H$ l'accélération horizontale de l'aéronef et $g$ l'accélération de la gravité terrestre.

Ainsi, cette vitesse verticale $Vv$ prend en compte l'énergie cinétique de l'aéronef et sa décélération horizontale.

De plus, cette vitesse verticale $Vv$ de l'aéronef peut varier tout au long de la trajectoire d'évitement et cette variation peut débuter pendant la phase de décélération.

De fait, la manoeuvre d'évitement ne comprend pas de phase de ressource à facteur de charge constant et vitesse d'avancement constante, la phase de ressource ayant lieu durant la phase de décélération.

Chaque nappe de trajectoires d'évitement prend en compte une incertitude latérale de trajectoire de l'aéronef et s'étend horizontalement de part et d'autre de la trajectoire nominale d'évitement élaborée. Cette nappe permet notamment de prendre en compte un éventuel changement de trajectoire de l'aéronef.

Pour un premier intervalle de temps consécutif à l'instant courant, chaque nappe prend en compte une possible mise en virage si le vol est rectiligne ou une possible variation du taux de virage si un virage est déjà engagé. Les trajectoires d'évitement possibles de chaque nappe constituent alors une enveloppe en forme d'éventail, les limites latérales de l'enveloppe ayant des rayons de courbure $R_e$. Ces rayons de courbure $R_e$ sont principalement fonction de la composante horizontale de la vitesse d'avancement courante de l'aéronef, du taux de virage et de l'angle de roulis de l'aéronef ainsi que de l'incertitude sur cet angle de roulis.

Les rayons de courbure $R_e$ de cette enveloppe sont par exemple tel que $R_e = \dfrac{V_H^2}{g.tan(\varphi)}$, $g$ étant l'accélération de la gravité terrestre, $\varphi$ étant l'angle de roulis initial de l'aéronef diminué ou augmenté de l'incertitude sur cet angle de roulis et $V_H$ étant la composante horizontale de sa vitesse d'avancement.

Une valeur typique de l'incertitude sur l'angle de roulis $\varphi$ est par exemple 5°.

Au-delà de ce premier intervalle de temps, chaque enveloppe prend la forme d'un triangle pendant un second intervalle de temps, puis la forme d'un rectangle pendant un troisième intervalle de temps.

Chaque premier intervalle de temps correspond par exemple à une distance parcourue de 100m. Le triangle constitué par l'enveloppe sur le second intervalle de temps est par exemple un triangle isocèle d'angle au sommet de 30° et l'enveloppe a une largeur de couloir de 1 mille nautique sur le troisième intervalle de temps.

Enfin, lorsqu'au moins une nappe de trajectoires d'évitement est élaborée, une ou plusieurs alertes peuvent être émises afin de signifier au pilote que la trajectoire courante de l'aéronef conduit à un risque de collision avec le relief survolé ou un obstacle éventuel. Ces alertes sont émises lorsqu'une nappe de trajectoires d'évitement se trouve à une distance inférieure à la marge du relief survolé ou d'un obstacle éventuel.

Des alertes peuvent par exemple être émises en fonction d'hypothèses sur le temps de réaction du pilote avant qu'il débute la manoeuvre d'évitement. Dans ce cas, le procédé selon l'invention élabore différentes nappes de trajectoires d'évitement possibles correspondant à des temps de réaction du pilote prédéterminés.

Une première alerte peut être émise par exemple lorsqu'une première nappe de trajectoires d'évitement, calculée à partir de l'hypothèse que le temps de réaction du pilote est égal à 20s (20 secondes), se trouve à une distance du terrain et des obstacles inférieure à la marge. Cette première alerte permet d'attirer l'attention du pilote sur un risque de collision. Le pilote peut alors prendre conscience de la situation de l'aéronef et dispose alors d'un temps suffisant pour corriger sa trajectoire afin d'éviter l'obstacle, sans engager obligatoirement une manoeuvre d'évitement proprement dit. Cette première alerte peut par exemple prendre la forme de l'annonce vocale « high terrain ahead » signifiant qu'un relief élevé se trouve à l'avant de la trajectoire courante de l'aéronef.

Une seconde alerte peut être émise par exemple lorsqu'une seconde nappe de trajectoires d'évitement, calculée à partir de l'hypothèse que le temps de réaction du pilote est égal à 5s (5 secondes), se trouve à une distance du terrain et des obstacles inférieure à la marge. Cette seconde alerte indique au pilote le risque imminent de collision. Le pilote doit alors agir rapidement pour engager la manoeuvre prédéterminée, et à laquelle il est entraîné, d'évitement du relief ou de l'obstacle éventuel. Dans ce cas, le pilote est supposé imposer à l'aéronef une manoeuvre d'évitement au moins aussi agressive que la trajectoire nominale d'évitement élaborée par le procédé selon l'invention. Cette seconde alerte peut par exemple prendre la forme de l'annonce vocale « pull up ! pull up ! » signifiant que le pilote doit exécuter immédiatement la manoeuvre prédéterminée à laquelle il est entrainé pour éviter le relief élevé se trouvant à l'avant de la trajectoire courante de l'aéronef.

Ces alertes peuvent être visuelles, affichant par exemple un message ou un symbole sur un écran de l'aéronef, et/ou sonores, émettant par exemple un ou plusieurs sons ou bien une annonce vocale audible par le pilote. Dans tous les cas, cette alerte doit être suffisamment explicite pour permettre au pilote d'identifier la situation et de réaliser la manoeuvre adaptée.

De plus, selon une variante de l'invention, le procédé d'émission d'une alerte pour l'évitement de terrain par un aéronef peut être couplé à un pilote automatique de l'aéronef. Ainsi, le procédé d'émission d'une alerte pour l'évitement de terrain par un aéronef peut comporter une étape supplémentaire pendant laquelle la manoeuvre d'évitement est réalisée par le pilote automatique.

Un organe de commande utilisé par cette variante peut être par exemple présent sur un tableau de bord de l'aéronef. Lorsqu'une alarme est émise et si le pilote appuie sur cet organe de commande, le pilote automatique réalise la manoeuvre d'évitement.

Dans un autre mode de réalisation de l'invention, le pilote automatique peut effectuer la manoeuvre d'évitement de façon automatique. Dans ce cas, le procédé selon l'invention élabore une nappe de trajectoires d'évitement basée sur un temps de réaction du pilote nul.

Avantageusement, les conditions de déclenchement des alertes afin d'éviter une collision de l'aéronef avec le relief survolé sont ainsi définies en prenant en compte en temps réel la position de l'aéronef par rapport au relief et aux obstacles éventuels, ses états courants et sa configuration notamment. De fait, ce procédé d'émission d'une alerte pour l'évitement de terrain est exécuté de façon répétitive et cyclique afin de prendre en compte l'avancement de l'aéronef vis-à-vis du relief et des obstacles éventuels ainsi que l'évolution de sa trajectoire.

De fait, le procédé selon l'invention s'adapte en fonction des états et des performances effectives courantes de l'aéronef et de sa manoeuvrabilité en prenant en compte son énergie cinétique optimisant ainsi la trajectoire d'évitement et, par suite, sa capacité à générer uniquement des alertes pertinentes.

Un autre objet de l'invention vise un dispositif d'émission d'alerte de terrain destiné à équipé un aéronef. Un tel dispositif comporte :

- au moins un calculateur apte à exécuter un algorithme de prédiction de trajectoire,

- au moins une première base de données du relief des zones de vol de l'aéronef reliée au calculateur, et

- au moins un moyen d'alerte relié au calculateur.

Ce dispositif est apte à mettre en oeuvre le procédé précédemment énoncé.

Cette première base de données peut contenir également les informations concernant les éventuels obstacles des zones de vol de l'aéronef. Cependant, ce dispositif d'émission d'alerte de terrain peut comporter au moins une seconde base de données spécifique à ces obstacles des zones de vol de l'aéronef, cette seconde base de données étant reliée au calculateur.

Un autre objet de l'invention vise un aéronef à voilure tournante qui comporte :

- au moins un rotor principal muni d'une pluralité de pales,

- une pluralité de capteurs, fournissant des informations sur des paramètres atmosphériques et de fonctionnement de l'aéronef et sur ses états courants, et

- un dispositif d'émission d'alerte de terrain précédemment énoncé.

L'invention et ses avantages apparaîtront avec plus de détails dans le cadre de la description qui suit avec des exemples de réalisation donnés à titre illustratif en référence aux figures annexées qui représentent :

- la figure 1, un schéma synoptique d'un procédé d'émission d'alerte de terrain selon l'invention,

- la figure 2, un aéronef à voilure tournante muni d'un dispositif d'émission d'alerte de terrain selon l'invention,

- la figure 3 une vue d'un aéronef à voilure tournante survolant le relief,

- la figure 4, une vue de détail d'une nappe de trajectoires d'évitement,

- la figure 5, une vue d'un aéronef à voilure tournante,

- les figures 6 à 8, trois graphes représentant respectivement les variations de la vitesse d'avancement, de la vitesse verticale et de l'accélération verticale de l'aéronef lors d'une phase de décélération, et

- les figures 9 et 10, deux vues d'une enveloppe formant une nappe de trajectoires d'évitement de l'aéronef à voilure tournante.

Les éléments présents dans plusieurs figures distinctes sont affectés d'une seule et même référence.

Sur les figures sont représentées trois directions X, Y et Z orthogonales les unes aux autres, qui forment un repère orthogonal X, Y, Z.

Une direction X dite longitudinale, correspond aux longueurs ou dimensions principales des structures décrites. Ainsi, la direction longitudinale X définit l'axe d'avancement principal des aéronefs décrits et la tangente à leur trajectoire instantanée en leur centre de gravité.

Une autre direction Y dite transversale, correspond aux trajectoires ou coordonnées latérales des structures décrites. Ces directions longitudinale X et transversale Y sont parfois dites horizontales, par simplification, et forment un plan XY horizontal.

Une troisième direction Z est dite d'élévation et correspond aux dimensions en hauteur et altitude des structures décrites. Cette direction Z est parfois dite verticale, par simplification, les termes haut / bas s'y référant.

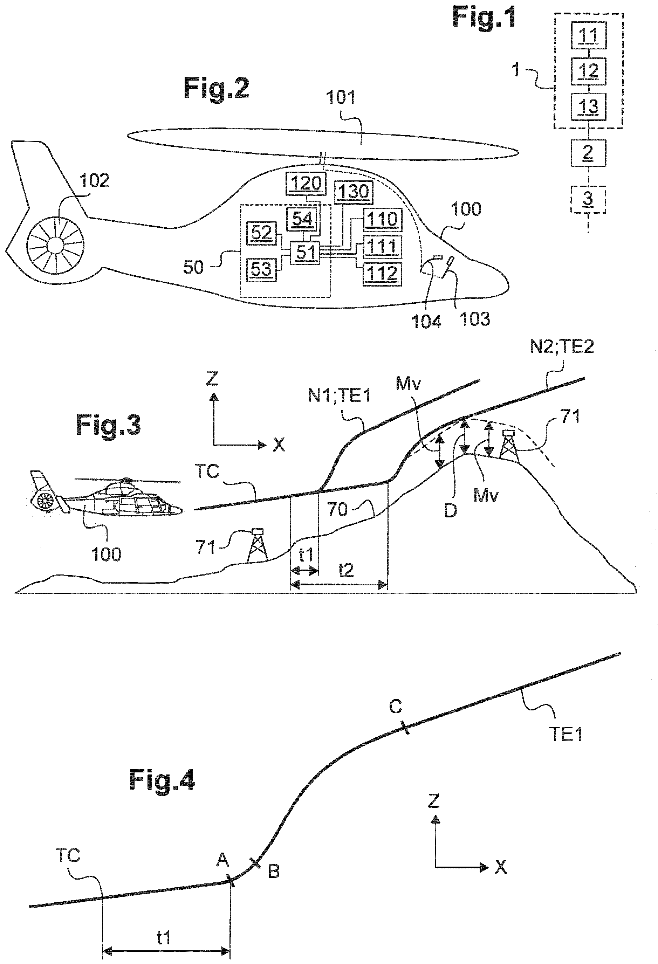

La figure 1 décrit un procédé d'émission d'une alerte pour l'évitement de terrain conforme à l'invention et destiné à un aéronef 100 à voilure tournante, ce procédé comportant plusieurs étapes.

La figure 2 décrit un tel aéronef 100 à voilure tournante. Cet aéronef 100 comporte notamment un rotor principal 101 muni d'une pluralité de pales assurant la propulsion et la sustentation de cet aéronef 100 et éventuellement un rotor arrière 102. Cet aéronef 100 comporte également un manche cyclique 103 et un manche collectif 104 permettant de piloter respectivement le pas cyclique et le pas collectif des pales du rotor principal 101 ainsi qu'une pluralité de capteurs 110,111,112 et un dispositif 50 d'émission d'une alerte pour l'évitement de terrain apte à mettre en oeuvre le procédé décrit sur la figure 1.

Ce dispositif 50 comporte au moins un calculateur 51, au moins une première base de données 52 du relief 70 des zones de vol de l'aéronef 100, au moins une seconde base de données 53 des obstacles 71 des zones de vol de l'aéronef 100 et au moins un moyen d'alerte 54. Les bases de données 52, 53 ainsi que le moyen d'alerte 54 sont reliés au calculateur 51.

La figure 3 représente cet aéronef 100 survolant un relief 70, ce relief 70 pouvant comporter des obstacles 71. Les caractéristiques de ce relief 70 sont extraites par le calculateur 51 de la première base de données 52 alors que les caractéristiques des obstacles 71 sont extraites par le calculateur 51 de la seconde base de données 53. Cependant, ces deux bases de données 52,53 peuvent être fusionnées afin de former une seule et même base de données.

Un tel procédé d'émission d'une alerte pour l'évitement de terrain permet de générer des alertes au moment opportun lorsqu'un risque de collision entre l'aéronef 100 et le relief 70 survolé ou bien un obstacle 71 éventuel est détecté afin de réaliser une manoeuvre d'évitement de ce relief 70 ou bien cet obstacle 71.

Une telle manoeuvre d'évitement peut être définie par le fabricant de l'aéronef et décrite dans le manuel de vol de l'aéronef.

Tout d'abord au cours d'une première étape 1 de ce procédé, on élabore plusieurs nappes de trajectoires N d'évitement possibles de l'aéronef 100. Chaque nappe N comporte une trajectoire nominale d'évitement TE et un continuum de trajectoires d'évitement, chaque nappe N se situant à l'avant de la position courante de l'aéronef 100. Chaque trajectoire nominale d'évitement TE est élaborée dans la continuité de la trajectoire courante TC de l'aéronef 100, le continuum de trajectoires d'évitement s'étendant horizontalement de part et d'autre de la trajectoire nominale d'évitement TE. Cette nappe N permet ainsi de prendre en compte une incertitude latérale de trajectoire de l'aéronef 100 après l'élaboration de la trajectoire nominale d'évitement TE.

Par exemple, deux premières trajectoires nominales d'évitement TE1,TE2 sont visibles sur la figure 3 dans le prolongement de la trajectoire courante TC de l'aéronef 100.

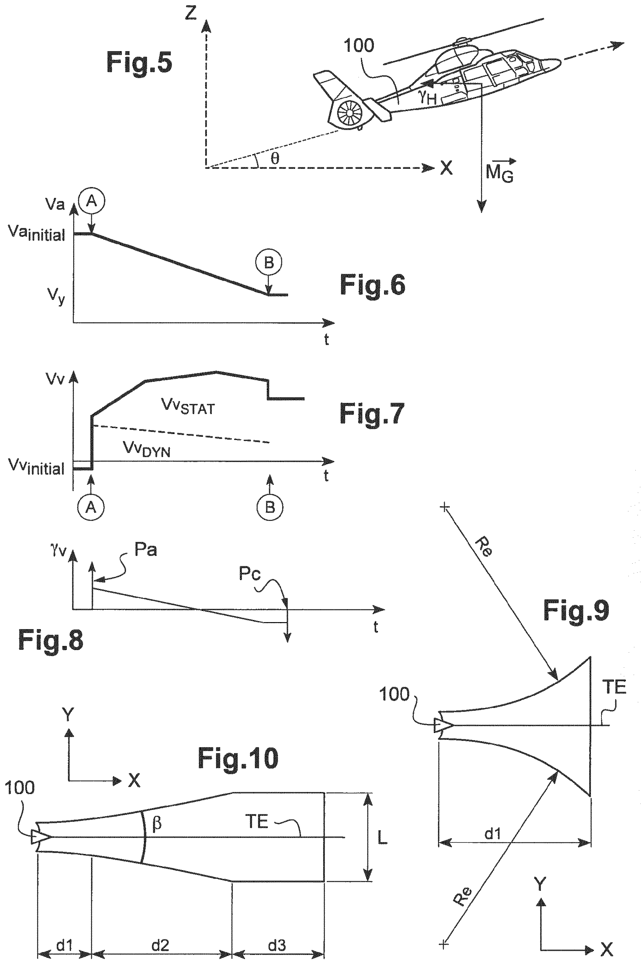

Les nappes N1,N2 s'étendent alors perpendiculairement à la figure 3 et sont donc confondues dans cette vue de droite avec les premières trajectoires nominales d'évitement TE1,TE2 respectivement. Une représentation en vue de haut de la nappe N1 est également réalisée sur les figures 9 et 10.

Chaque trajectoire nominale d'évitement TE prolonge la trajectoire courante de l'aéronef 100 et est généralement obtenue par l'intermédiaire d'un algorithme de prédiction de trajectoire. Cet algorithme exécuté par le calculateur 51 permet d'estimer les états futurs de l'aéronef 100 en fonction notamment des états courants de cet aéronef 100. Ces états courants et futurs de l'aéronef 100 sont entre autres la position, l'altitude et la vitesse d'avancement ainsi que la vitesse verticale de l'aéronef 100.

Chaque nappe N1,N2 comporte des trajectoires d'évitement possibles de l'aéronef 100, un ou plusieurs paramètres de l'aéronef 100 ou bien de l'élaboration de la trajectoire d'évitement étant modifiés pour l'élaboration de chaque nappe N1,N2. Par exemple, la nappe N1 correspond à un premier temps de réaction t1 du pilote et la nappe N2 correspond à un second temps de réaction t2 du pilote, le premier temps de réaction t1 étant inférieur au second temps de réaction t2. Chaque temps de réaction t1,t2 correspond au temps entre l'instant de déclenchement de l'alerte et l'instant de la réaction du pilote, donc au début des trajectoires d'évitement formant chaque nappe N1,N2.

On constate sur la figure 3 que la nappe N2 se trouve à une distance D du relief 70 survolé. Cette distance D est inférieure à une distance prédéterminée correspondant à une marge verticale Mv, ce qui signifie qu'un risque de collision entre l'aéronef 100 et le relief 70 existe.

En effet, la nappe N2 correspondant à une hypothèse sur le temps maximal de réaction t2, si le pilote de l'aéronef 100 n'engage pas une manoeuvre d'évitement avant un temps inférieur ou égal à ce temps de réaction t2, l'aéronef 100 risque d'entrer en collision avec le relief 71.

Au cours d'une seconde étape 2, une alerte est alors émise dès qu'un tel risque de collision entre l'aéronef 100 et le relief 70 ou bien un obstacle 71 éventuel est avéré, c'est-à-dire dès que la distance D entre au moins une nappe N1 ou N2 et le relief 70 ou bien un obstacle 71 éventuel est inférieure à la distance prédéterminée Mv.

Chaque nappe N1,N2 comporte une trajectoire nominale d'évitement TE élaborée par le calculateur 51 au cours de la première étape 1 à partir d'une manoeuvre d'évitement prédéterminée et des états de l'aéronef 100. Cette trajectoire nominale d'évitement TE comporte au moins trois phases :

- une phase préliminaire 10 pendant laquelle le pilote ne réagit pas encore, et donc pendant laquelle la trajectoire est le pur prolongement de la trajectoire courante TC,

- une phase de décélération 12 jusqu'à une vitesse d'avancement prédéterminée $Va_{finale}$, la phase de décélération 12 étant réalisée par une prise d'une assiette à cabrer prédéterminée de l'aéronef 100 et à une puissance maximale prédéterminée de l'aéronef 100,

- une phase finale 13 de montée de l'aéronef 100 à cette vitesse d'avancement prédéterminée $Va_{finale}$ à la puissance maximale prédéterminée de l'aéronef 100.

De plus, ce procédé peut comporter une phase initiale 11 de remise en vol rectiligne de l'aéronef 100 réalisée avant la phase de décélération 12. Cette phase initiale 11 est notamment incluse lorsque l'aéronef 100 a un taux de virage non nul.

De préférence, cette puissance maximale prédéterminée est la Puissance Maximale Continue (*PMC*) de l'aéronef 100, qui est la puissance maximale que peut fournir de façon continue l'ensemble des moteurs de l'aéronef 100 sans endommager la chaîne motrice de l'aéronef 100. De plus, avantageusement, la vitesse d'avancement prédéterminée $Va_{finale}$ est la vitesse d'avancement $Vy$ de montée optimale.

Cette trajectoire nominale d'évitement TE doit être adaptée à chaque aéronef 100 à voilure tournante et dépend donc de ses capacités et de ses caractéristiques intrinsèques telles que sa puissance motrice installée et ses caractéristiques aérodynamiques par exemple.

Cette trajectoire d'évitement nominale TE dépend également des paramètres atmosphériques entourant l'aéronef 100.

Enfin, cette trajectoire d'évitement nominale TE dépend des états courants de l'aéronef 100 et des paramètres de fonctionnement de l'aéronef 100.

Après la réalisation éventuelle de la phase initiale 11 de remise en vol rectiligne de l'aéronef 100, la phase de décélération 12 permet de réduire la vitesse d'avancement de l'aéronef 100 jusqu'à la vitesse d'avancement prédéterminée $Va_{finale}$ qui est atteinte au point C, comme indiqué sur la figure 4. Ainsi, au cours de cette phase de décélération 12, dans un premier temps, le pilote augmente à l'aide du manche cyclique 103 de l'aéronef 100 l'assiette à cabrer de l'aéronef 100 jusqu'à un angle prédéterminé par rapport à un plan horizontal afin que l'aéronef 100 ait une grande capacité de décélération. Cette augmentation de l'angle à cabrer de l'aéronef 100 est brève et l'assiette de l'aéronef 100 est égale à l'angle prédéterminé au point B. Cette augmentation de l'angle à cabrer de l'aéronef 100 nécessite quelques secondes, par exemple entre 2 et 4s (2 et 4 secondes). Cet angle prédéterminé est de préférence constant et égal à 15°.

Ensuite, entre les points B et C, la diminution d'énergie cinétique de l'aéronef 100 permet une augmentation de son énergie potentielle et, par suite, un gain de vitesse verticale. La phase de décélération se termine en C, où la vitesse d'avancement atteint la vitesse prédéterminée $Va_{finale}$. Cette vitesse d'avancement prédéterminée $Va_{finale}$ peut être caractérisée par un taux optimal de montée.

De plus, le pilote doit, durant toute la phase de décélération 12 et simultanément à l'action sur le manche cyclique 103, tirer sur un manche collectif 104 de l'aéronef 100 afin d'augmenter le pas collectif des pales du rotor principal 101 de l'aéronef 100 à voilure tournante de telle manière que les moteurs de l'aéronef 100 fournissent la puissance maximale prédéterminée, le pilote s'aidant d'un Indicateur de Première Limitation (IPL) de l'aéronef 100 pour contrôler cette puissance maximale prédéterminée. Ainsi, le pilote peut disposer d'une puissance importante sans risque de dommage des moteurs.

Enfin, au-delà du point C, c'est à dire durant la phase finale 13 de montée, la trajectoire d'évitement est rectiligne, l'assiette de l'aéronef 100 est maintenue sensiblement horizontale, la vitesse d'avancement de l'aéronef 100 étant la vitesse d'avancement prédéterminée $Va_{finale}$.

La variation de la vitesse d'avancement de l'aéronef 100, aussi désignée « vitesse Air » ou $Va$, pendant la phase de décélération 12, est représentée sur le graphique de la figure 6. Sur ce graphique, il a été considéré que la trajectoire nominale d'évitement TE ne comportait pas de phase initiale 11. De fait, la vitesse d'avancement $Va$ diminue dès l'instant A, l'aéronef 100 réalisant une prise d'une assiette à cabrer prédéterminée et ralentissant jusqu'à la vitesse d'avancement prédéterminée $Va_{finale}$ qui est atteinte à l'instant C.

Une fois l'instant C atteint, l'aéronef 100 entre dans la phase finale 13 de montée, la vitesse d'avancement étant par ailleurs maintenue à cette vitesse prédéterminée $Va_{finale}$. La trajectoire d'évitement devient alors sensiblement rectiligne.

De fait, la trajectoire d'évitement comprend une phase de ressource uniquement entre les instants A et C, c'est-à-dire pendant la phase de décélération 12 avec un facteur de charge et une vitesse d'avancement qui ne sont pas constants.

Le graphique de la figure 7 représente un profil de variation temporelle de la vitesse verticale $Vv$ d'un aéronef 100 entre les instants A et C, c'est-à-dire pendant cette phase de décélération 12. Cette vitesse verticale $Vv$ est constituée d'une composante statique $Vv_{STAT}$ telle que $Vv_{STAT} = Vv_s(M_a, V_a, P_S, T_S, E_S)$ et d'une composante dynamique $Vv_{DYN}$ telle que $Vv_{DYN} = GS \dfrac{\gamma_H}{g}$, les différents paramètres de ces composantes étant définis ci-dessous.

Cette composante statique $Vv_{STAT}$ peut être issue d'une table obtenue à partir des abaques du manuel de vol de l'aéronef 100 qui sont approuvés par les autorités de certification. Une interpolation linéaire entre les points de la table peut être effectuée pour obtenir la composante statique $Vv_{STAT}$ qui est alors fonction des paramètres atmosphériques et de fonctionnement de l'aéronef 100 ainsi que des états de l'aéronef 100.

Ces différents paramètres sont obtenus par exemple par l'intermédiaire des capteurs 110, 111,112 présents dans l'aéronef 100.

Les paramètres atmosphériques sont par exemple la pression statique $Ps$ et la température statique $Ts$ autour de l'aéronef 100.

Les états de l'aéronef 100 sont par exemple la masse instantanée $M$ de l'aéronef 100, sa vitesse d'avancement par rapport à l'air $Va$, sa vitesse d'avancement $GS$ par rapport au sol, son accélération horizontale $y_H$. La masse apparente de l'aéronef $M_a$ telle que $M_a = M \dfrac{\sqrt{g^2 + \gamma_H{}^2}}{g}$, $g$ étant l'accélération de la gravité terrestre, peut également être utilisée.

Les paramètres de fonctionnement sont par exemple l'état du ou des moteurs de l'aéronef 100, par exemple si un seul moteur ou bien deux moteurs fonctionnent, l'état de vieillissement de ses moteurs, la configuration de l'aéronef 100 ou bien l'état rentré ou bien sorti de son train d'atterrissage.

Ces paramètres de fonctionnement sont par exemple fournis par des équipements de vol existants et classiques, tels qu'un calculateur moteur *FADEC* 130. Ce calculateur moteur *FADEC* 130 est alors relié au calculateur 51 et fournit un paramètre booléen $E_S$ caractérisant le mode de fonctionnement des moteurs, c'est-à-dire les modes *OEI* et *AEO.*

La composante dynamique $Vv_{DYN}$ est basée sur la composante horizontale de la vitesse d'avancement $GS$ de l'aéronef 100 par rapport au sol et sur l'inclinaison $\theta$ de l'horizontale apparente de l'aéronef 100. Cette inclinaison $\theta$ de l'horizontale apparente de l'aéronef 100 est représenté sur la figure 5 et est caractérisée par la fonction arc-tangente du rapport de l'accélération horizontale $\gamma_H$ de l'aéronef 100 et de l'accélération de la gravité terrestre $g$, telle que $tan(\theta) = \dfrac{\gamma_H}{g}$.

Ainsi, cette vitesse verticale $Vv$ de l'aéronef 100 est déterminée par une formule $Vv = Vv_S\left(M_a, V_a, P_S, T_S, E_S\right) + GS \dfrac{\gamma_H}{g}$ et prend en compte l'énergie cinétique restituée par la décélération horizontale de l'aéronef 100.

De plus, cette vitesse verticale $Vv$ de l'aéronef peut varier tout au long de la trajectoire d'évitement sous l'effet des variations de ses deux composantes statique et dynamique :

- la composante dynamique $Vv_{DYN}$ croît en échelon à l'instant A, sous l'effet quasi instantané de la prise d'assiette de l'aéronef 100, puis décroît de manière sensiblement linéaire du temps au fur et à mesure que la vitesse d'avancement *GS* par rapport au sol décroît, et

- la composante statique $Vv_{STAT}$ croît de manière monotone depuis une valeur faible correspondant à la vitesse verticale maximale initiale de l'aéronef, cette vitesse verticale maximale pouvant être nulle si l'aéronef volait initialement en palier à sa vitesse d'avancement maximale.

Par ailleurs, le profil de l'accélération verticale $\gamma_V$ de l'aéronef 100 peut être par exemple conforme au graphique de la figure 8. Selon un mode de réalisation de l'invention, ce profil comporte au niveau des points A et C deux pics $P_A$ et $P_C$, dénommés également « impulsions de Dirac ». Dans d'autres modes de réalisation, ces pics $P_A$ et $P_C$ peuvent être remplacés par des rectangles brefs et de même poids. L'accélération horizontale $\gamma_H$ de l'aéronef 100, non représentée dans les figures, se déduit de la courbe temporelle de vitesse *Va*. Elle peut avoir une valeur fixe négative entre les instants A et C, correspondant à la décélération de l'aéronef 100, par exemple telle que $\gamma_H = -tan(15°).g$.

La position de l'aéronef 100 et sa vitesse d'avancement peuvent être alors calculées à partir de son accélération par intégration avec prise en compte des conditions initiales, c'est-à-dire celles au point A, et avec la prise en compte du vent.

Cependant, la trajectoire de l'aéronef 100 peut être modifiée par le pilote de manière imprévisible. De fait, afin de déterminer si le risque de collision entre l'aéronef 100 et le relief 70 survolé existe, tout en prenant en compte une incertitude latérale de cette trajectoire de l'aéronef 100, on prend en compte des trajectoires d'évitement autour de la trajectoire nominale d'évitement TE. Ces trajectoires d'évitement s'étendent horizontalement de part et d'autre de cette trajectoire nominale d'évitement TE et forment avec cette trajectoire nominale d'évitement TE une nappe N1 dont l'enveloppe est représentée sur les figures 9 et 10.

Sur un premier intervalle de temps, cette enveloppe doit prendre en compte une possible variation du taux de virage de l'aéronef 100. L'enveloppe a, selon la figure 9, une forme d'éventail, les parois extérieures de l'enveloppe ayant un rayon de courbure $R_e$. Ce rayon de courbure $R_e$ de cette enveloppe est par exemple tel que $R_e = \dfrac{V_H^2}{g.tan(\varphi)}$, $g$ étant l'accélération de la gravité terrestre, $\varphi$ étant l'angle de roulis de l'aéronef augmenté ou diminué de l'incertitude sur cet angle de roulis de l'aéronef 100 et $V_H$ étant la composante horizontale de sa vitesse d'avancement. On peut prendre par exemple une incertitude sur l'angle de roulis de l'aéronef égale à 5°.

La largeur initiale de l'éventail et sa longueur d1 peuvent être de 100m sur ce premier intervalle de temps parcouru à la vitesse d'avancement courante de l'aéronef 100. Ensuite, cette enveloppe prend la forme d'un triangle pendant un second intervalle de temps, puis la forme d'un rectangle pendant un troisième intervalle de temps. Cette enveloppe complète est représentée sur la figure 10.

Le triangle constitué par l'enveloppe sur le second intervalle de temps est par exemple un triangle isocèle d'angle au sommet $\beta$ égal à 30° et l'enveloppe a une largeur de couloir L égale à 1 mille nautique sur le troisième intervalle de temps.

Enfin au cours de la seconde étape 2 de ce procédé, on émet une alerte lorsqu'une nappe de trajectoires d'évitement de l'aéronef 100 se trouve à une distance D du relief survolé ou d'un obstacle éventuel inférieure à la marge verticale Mv. Cette alerte déclenchée par le moyen d'alerte 54 peut être visuelle, affichant par exemple un message sur un écran présent dans l'aéronef 100, et/ou sonore, émettant par exemple une annonce vocale audible par le pilote.

Une première alerte peut par exemple être émise lorsque la nappe N2 correspondant à une hypothèse de temps de réaction t2 du pilote de 20s (20 secondes) se trouve à une distance D du relief survolé inférieure à la marge verticale Mv afin d'avertir le pilote du risque de collision.

Une seconde alerte peut par exemple être émise lorsque la nappe N1 correspondant à une hypothèse de temps de réaction t1 du pilote de 5s (5 secondes) se trouve à une distance D du relief survolé inférieure à la marge verticale Mv afin d'alerter le pilote du risque imminent de collision.

De plus, selon une variante de l'invention, le procédé d'émission d'une alerte pour l'évitement de terrain par un aéronef 100 peut être couplé à un pilote automatique 120 de cet aéronef 100. Ainsi, le procédé d'émission d'une alerte pour l'évitement de terrain par un aéronef 100 peut comporter une étape 3 supplémentaire pendant laquelle la manoeuvre d'évitement peut être réalisée par le pilote automatique 120.

Un organe de commande utilisée par cette variante peut être par exemple présent sur une poignée de l'un des manches de pilotage de l'aéronef 100. Lorsqu'une alarme est émise et si le pilote actionne cet organe de commande, le pilote automatique réalise la manoeuvre d'évitement.

Le pilote automatique peut également réaliser la manoeuvre d'évitement de façon automatique, si par exemple une nappe de trajectoires d'évitement basée sur une hypothèse de temps de réaction nul se trouve à une distance D du relief survolé inférieure à la marge verticale Mv.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

1. Procédé d'émission d'une alerte pour l'évitement de terrain par un aéronef (100) à voilure tournante, au cours duquel, de manière répétitive :

   - on élabore au moins une nappe (N1,N2) de trajectoires d'évitement possibles dudit aéronef (100) afin d'éviter une collision dudit aéronef (100) avec le relief survolé (70) par ledit aéronef (100) ou bien avec un obstacle (71) éventuel,
   - on déclenche une alerte dès qu'une desdites nappes (N1,N2) de trajectoires d'évitement possibles se trouve à une distance (D) dudit relief survolé (70) ou bien dudit obstacle (71) éventuel inférieure à une distance prédéterminée (Mv),
   - lesdites trajectoires d'évitement possibles étant déterminées à partir d'une manoeuvre d'évitement prédéterminée et des états courants dudit aéronef (100),

   **caractérisé en ce que** ladite manoeuvre d'évitement comporte

   - une phase de décélération (12) jusqu'à une vitesse d'avancement prédéterminée $Va_{finale}$, ladite phase de décélération (12) étant obtenue par une prise d'une assiette à cabrer prédéterminée dudit aéronef (100) et réalisée à une puissance maximale prédéterminée dudit aéronef (100), et
   - une phase finale (13) de montée dudit aéronef (100) pendant laquelle la vitesse d'avancement dudit aéronef (100) est maintenue égale à ladite vitesse d'avancement prédéterminée $Va_{finale}$, et la puissance des moteurs est maintenue égale à ladite puissance maximale prédéterminée.

2. Procédé selon la revendication 1,
   **caractérisé en ce que** ledit aéronef (100) disposant d'une puissance maximale continue (*PMC*), ladite puissance maximale prédéterminée dudit aéronef (100) est ladite puissance maximale continue (*PMC*).

3. Procédé selon l'une quelconque des revendications 1 à 2,
   **caractérisé en ce que** ladite manoeuvre d'évitement comporte une phase initiale (11) de remise en vol rectiligne dudit aéronef (100) réalisée avant ladite phase de décélération (12).

4. Procédé selon l'une quelconque des revendications 1 à 3,
   **caractérisé en ce que** ladite phase de décélération (12) est réalisée à l'aide d'un manche cyclique (103) dudit aéronef (100) de façon à transformer lors de ladite phase de décélération (12) une partie de l'énergie cinétique dudit aéronef (100) en énergie potentielle dudit aéronef (100) permettant une augmentation d'une vitesse verticale $Vv$ dudit aéronef (100) jusqu'à ce que soit atteinte ladite vitesse d'avancement prédéterminée $Va_{finale}$.

5. Procédé selon l'une quelconque des revendications 1 à 4,
   **caractérisé en ce que** ladite manoeuvre d'évitement est réalisée à l'aide d'un manche collectif (104) dudit aéronef (100) afin de réguler la puissance développée par ledit aéronef (100) à une valeur égale à ladite puissance maximale prédéterminée dudit aéronef (100).

6. Procédé selon l'une quelconque des revendications 1 à 5, **caractérisé en ce que** ladite distance entre chaque nappe (N1,N2) de trajectoires d'évitement possibles et ledit relief survolé (70) ou bien ledit obstacle (71) éventuel comparée à ladite distance prédéterminée (Mv) est selon une direction uniquement verticale.

7. Procédé selon l'une quelconque des revendications 1 à 6,
   **caractérisé en ce que** lesdites trajectoires d'évitement possibles de chaque nappe (N1,N2) constituent une enveloppe en forme d'éventail sur une première distance d1 avec un rayon de courbure $R_e$ selon une relation

$$R_e = \frac{V_H{}^2}{g.tan(\varphi)},$$

- $g$ étant l'accélération de la gravité terrestre,
- $\varphi$ étant l'angle de roulis de l'aéronef, et
- $V_H$ étant la composante horizontale de la vitesse d'avancement courante dudit aéronef (100).

**8.** Procédé selon l'une quelconque des revendications 1 à 7,
**caractérisé en ce que**, pour déterminer chaque trajectoire d'évitement dudit aéronef (100), on détermine les états futurs dudit aéronef (100) à partir des états dudit aéronef (100) au cours des au moins cinq secondes précédant l'état courant de vol dudit aéronef (100).

**9.** Procédé selon l'une quelconque des revendications 1 à 8,
**caractérisé en ce qu'**une vitesse verticale $Vv$ dudit aéronef (100) est déterminée par une formule

$$Vv = Vv_S\left(V_a, M_a, P_S, T_S, E_S\right) + GS\frac{\gamma_h}{g}$$, $Vv_S(V_a, M_a, P_S, T_S, E_S)$ correspondant à une composante statique

$Vv_{STAT}$ de ladite vitesse verticale $Vv$, ladite composante statique $Vv_{STAT}$ étant issue d'une table obtenue à partir des abaques du manuel de vol dudit aéronef (100), et $GS\dfrac{\gamma_h}{g}$ correspondant à une composante dynamique $Vv_{DYN}$

de ladite vitesse verticale $Vv$,

- $V_a$ étant la vitesse d'avancement dudit l'aéronef (100) par rapport à l'air,

- $M_a$ étant la masse apparente dudit aéronef (100) telle que $M_a = M\dfrac{\sqrt{g^2 + \gamma_H{}^2}}{g}$, $M$ étant la masse dudit aéronef (100), $g$ étant l'accélération de la gravité terrestre et $\gamma_H$ étant l'accélération horizontale dudit aéronef (100),
- $P_s$ étant la pression statique autour dudit aéronef (100),
- $T_s$ étant la température statique autour dudit aéronef (100),
- $E_s$ étant un paramètre correspondant à l'état du ou des moteurs dudit aéronef (100)
- $GS$ étant la vitesse d'avancement dudit aéronef par rapport au sol.

**10.** Procédé selon l'une quelconque des revendications 1 à 9,
**caractérisé en ce que** ladite assiette à cabrer prédéterminée dudit aéronef (100) est constante.

**11.** Procédé selon la revendication 10,
**caractérisé en ce que** ladite assiette à cabrer prédéterminée dudit aéronef (100) est de 15° par rapport à un plan horizontal.

**12.** Procédé selon l'une quelconque des revendications 1 à 11,
**caractérisé en ce que** ladite vitesse d'avancement prédéterminée $Va_{finale}$ correspond à une vitesse d'avancement $Vy$ procurant une vitesse de montée optimale.

**13.** Procédé selon l'une quelconque des revendications 1 à 12,
**caractérisé en ce que** chaque nappe (N1,N2) desdites trajectoires d'évitement possibles correspond à une hypothèse de temps de réaction (t1,t2) du pilote prédéterminé pour la réalisation de chaque trajectoire d'évitement de ladite nappe (N1,N2).

**14.** Procédé selon la revendication 13,
**caractérisé en ce qu'**une première alerte est déclenchée lorsque ladite nappe (N1,N2) de trajectoires d'évitement se trouvant à une distance (D) inférieure à ladite distance prédéterminée (Mv) dudit relief (70) ou bien dudit obstacle (71) éventuel correspond à une hypothèse de temps de réaction (t2) du pilote égal à 20s afin d'informer le pilote du risque de ladite collision.

**15.** Procédé selon l'une quelconque des revendications 13 à 14,
**caractérisé en ce qu'**une seconde alerte est déclenchée lorsque ladite nappe (N1,N2) de trajectoires d'évitement se trouvant à une distance inférieure à ladite distance prédéterminée (Mv) dudit relief (70) ou bien dudit obstacle (71) éventuel correspond à une hypothèse de temps de réaction (t1) du pilote égal à 5s afin d'alerter le pilote du risque imminent de ladite collision.

**16.** Procédé selon l'une quelconque des revendications 1 à 15
**caractérisé en ce que** ladite trajectoire d'évitement ne comprend pas de phase de ressource à facteur de charge constant et vitesse constante.

**17.** Procédé selon l'une quelconque des revendications 1 à 16,
**caractérisé en ce que**, ledit aéronef (100) comportant un pilote automatique, ladite trajectoire d'évitement est pilotée par ledit pilote automatique dès qu'une alerte est déclenchée.

**18.** Dispositif (50) d'émission d'alerte de terrain destiné à équipé un aéronef (100), ledit dispositif (50) comportant :

- au moins un calculateur (51) apte à exécuter un algorithme de prédiction de trajectoire,
- au moins une première base de données (52) du relief (70) des zones de vol dudit aéronef (100) reliée audit calculateur (51), et
- au moins un moyen d'alerte (54) relié audit calculateur (51),

**caractérisé en ce que** ledit dispositif (50) est apte à mettre en oeuvre le procédé selon à l'une des revendications 1 à 17.

**19.** Aéronef (100) à voilure tournante comportant :

- au moins un rotor principal (101) muni d'une pluralité de pales,
- un manche cyclique (103) pilotant le pas cyclique desdites pales dudit rotor principal (101),
- un manche collectif (104) pilotant le pas collectif desdites pales dudit rotor principal (101) et
- une pluralité de capteurs (110,111,112), fournissant des informations sur des paramètres atmosphériques de fonctionnement dudit aéronef (100) et sur des états dudit aéronef (100),

**caractérisé en ce que** ledit aéronef (100) comporte un dispositif (50) selon la revendication 18.

**Patentansprüche**

**1.** Verfahren zur Ausgabe eines Alarms zum Vermeiden eines Gebiets durch ein Drehflügelflugzeug (100), bei dem in wiederholter Weise:

- mindestens eine Anordnung (N1, N2) von möglichen Ausweichflugbahnen des Flugzeugs (100) ausgearbeitet wird, um eine Kollision des Flugzeugs (100) mit den von dem Flugzeug (100) überflogenen Höhenlagen (70) oder mit einem etwaigen Hindernis (71) zu vermeiden,
- ein Alarm ausgelöst wird, sobald eine der Anordnungen (N1, N2) möglicher Ausweichflugbahnen sich in einem Abstand (D) von den überflogenen Höhenlagen (70) oder von dem etwaigen Hindernis (71) befindet, der kleiner als ein vorbestimmter Abstand (Mv) ist,
- die möglichen Ausweichflugbahnen ausgehend von einem vorbestimmten Ausweichmanöver und den aktuellen Zuständen des Flugzeugs (100) bestimmt werden,

**dadurch gekennzeichnet, dass** das Ausweichmanöver aufweist:

- eine Phase der Entschleunigung (12) bis auf eine vorbestimmte Vortriebsgeschwindigkeit $Va_{finale}$, wobei die Entschleunigungsphase (12) durch das Einnehmen eines vorbestimmten Anstellwinkels des Flugzeugs (100) erhalten wird und bei einer vorbestimmten maximalen Leistung des Flugzeugs (100) ausgeführt wird, und
- eine finale Steigphase (13) des Flugzeugs (100), während der die Vortriebsgeschwindigkeit des Flugzeugs (100) mit der vorbestimmten Vortriebsgeschwindigkeit $Va_{finale}$ gleichgehalten wird, und die Leistung der Motoren gleich der vorbestimmten maximalen Leistung gehalten wird.

**2.** Verfahren nach Anspruch 1,
**dadurch gekennzeichnet, dass** das Flugzeug (100) über eine maximale Dauerleistung (PMC) verfügt, wobei die vorbestimmte maximale Leistung des Flugzeugs (100) die maximale Dauerleistung (PMC) ist.

**3.** Verfahren nach einem der Ansprüche 1 bis 2,
**dadurch gekennzeichnet, dass** Ausweichmanöver eine Anfangsphase (11) der Rückführung des Flugzeugs (100) in einen Geradeausflug aufweist, welche vor der Entschleunigungsphase (12) ausgeführt wird.

4. Verfahren nach einem der Ansprüche 1 bis 3,
**dadurch gekennzeichnet, dass** die Entschleunigungsphase (12) ausgeführt wird mit Hilfe eines zyklischen Steuerknüppels (103) des Flugzeugs (100), derart, dass während der Entschleunigungsphase (12) ein Teil der kinetischen Energie des Flugzeugs (100) in potenzielle Energie des Flugzeugs (100) umgewandelt wird, welche eine Erhöhung der vertikalen Geschwindigkeit Vv des Flugzeugs (100), bis die vorbestimmte Vortriebsgeschwindigkeit $Va_{finale}$ erreicht wird, erlaubt.

5. Verfahren nach einem der Ansprüche 1 bis 4,
**dadurch gekennzeichnet, dass** das Ausweichmanöver mit Hilfe eines kollektiven Steuerknüppels (104) des Flugzeugs (100) ausgeführt wird, um die von dem Flugzeug (100) entwickelte Leistung auf einen Wert zu regeln, der gleich der vorbestimmten maximalen Leistung des Flugzeugs (100) ist.

6. Verfahren nach einem der Ansprüche 1 bis 5,
**dadurch gekennzeichnet, dass** der Abstand zwischen jeder Anordnung (N1, N2) möglicher Ausweichflugbahnen und den überflogenen Höhenlagen (70) oder dem etwaigen Hindernis (71), der mit dem vorbestimmten Abstand (Mv) verglichen wird, ausschließlich vertikal verläuft.

7. Verfahren nach einem der Ansprüche 1 bis 6,
**dadurch gekennzeichnet, dass** die möglichen Ausweichflugbahnen einer jeden Anordnung (N1, N2) über einen ersten Abstand d1 eine fächerförmige Einhüllende mit einem Krümmungsradius $R_e$ darstellen gemäß einer Beziehung $R_e = \dfrac{V_H^2}{g \cdot \tan(\varphi)}$ , wobei

- g die Erdbeschleunigung,
- $\varphi$ der Rollwinkel des Flugzeugs, und
- $V_H$ die horizontale Komponente der aktuellen Vortriebsgeschwindigkeit des Flugzeugs (100) ist.

8. Verfahren nach einem der Ansprüche 1 bis 7,
**dadurch gekennzeichnet, dass** zum Bestimmen einer jeden Ausweichflugbahn des Flugzeugs (100) die zukünftigen Zustände des Flugzeugs (100) ausgehend von Zuständen des Flugzeugs (100) während mindestens fünf Sekunden vor dem aktuellen Flugzustand des Flugzeugs (100) bestimmt werden.

9. Verfahren nach einem der Ansprüche 1 bis 8,
**dadurch gekennzeichnet, dass** eine vertikale Geschwindigkeit Vv des Flugzeugs (100) durch eine Formel Vv = $Vv_s(V_a, M_a, P_S, T_S, E_S) + GS\dfrac{\gamma h}{g}$ bestimmt wird, die einer statischen Komponente $Vv_{STAT}$ der vertikalen Geschwindigkeit Vv entspricht, wobei die statische Komponente $Vv_{STAT}$ aus einer Tabelle hervorgeht, die erhalten wird ausgehend von Diagrammen des Handbuchs des Flugzeugs (100) und wobei $GS\dfrac{\gamma h}{g}$ einer dynamischen Komponente $Vv_{DYN}$ der vertikalen Geschwindigkeit Vv entspricht, wobei

- $V_a$ die Vortriebsgeschwindigkeit des Flugzeugs (100) relativ zur Luft ist,

- $M_a$ die scheinbare Masse des Flugzeugs (100) ist nach der Gleichung $M_a = M\,\dfrac{\sqrt{g^2 + \gamma_H^2}}{g}$ , wobei M die Masse des Flugzeugs (100), g die Erdbeschleunigung und $\gamma_H$ die horizontale Beschleunigung des Flugzeugs (100) bezeichnen,
- $P_S$ der der das Flugzeug (100) umgebende statische Druck ist,
- $T_S$ die statische Umgebungstemperatur des Flugzeugs (100) ist,
- $E_S$ ein Parameter ist, der dem Zustand des Motors oder der Motoren des Flugzeugs (100) entspricht,
- GS die Vortriebsgeschwindigkeit des Flugzeugs gegenüber dem Boden bezeichnet.

**10.** Verfahren nach einem der Ansprüche 1 bis 9,
**dadurch gekennzeichnet, dass** der vorbestimmte Anstellwinkel des Flugzeugs (100) konstant ist.

**11.** Verfahren nach Anspruch 10,
**dadurch gekennzeichnet, dass** der vorbestimmte Anstellwinkel des Flugzeugs (100) 15° gegenüber einer horizontalen Ebene beträgt.

**12.** Verfahren nach einem der Ansprüche 1 bis 11,
**dadurch gekennzeichnet, dass** die vorbestimmte Vortriebsgeschwindigkeit $Va_{finale}$ einer Vortriebsgeschwindigkeit $V_y$ entspricht, die eine optimale Steiggeschwindigkeit liefert.

**13.** Verfahren nach einem der Ansprüche 1 bis 12,
**dadurch gekennzeichnet, dass** jede Anordnung (N1, N2) der möglichen Ausweichflugbahnen einer angenommenen Reaktionsgeschwindigkeit (t1, t2) des Piloten entspricht, die vorbestimmt ist für die Ausführung einer jeden Ausweichflugbahn der Anordnung (N1, N2).

**14.** Verfahren nach Anspruch 13,
**dadurch gekennzeichnet, dass** ein erster Alarm ausgelöst wird, wenn die Anordnung (N1, N2) von Ausweichflugbahnen, die sich in einem Abstand (D) befindet, der kleiner ist als der vorbestimmte Abstand (Mv) der Höhenlagen (70) oder des etwaigen Hindernisses (71), einer angenommenen Rekationszeit (t2) des Piloten entspricht, die gleich 20s ist, um den Piloten von der Gefahr einer Kollision zu informieren.

**15.** Verfahren nach einem der Ansprüche 13 bis 14,
**dadurch gekennzeichnet, dass** ein zweiter Alarm ausgelöst wird, wenn die Anordnung (N1, N2) von Ausweichflugbahnen, die sich in einem Abstand von den Höhenlagen (70) oder dem etwaigen Hindernis (71), der kleiner als der vorbestimmte Abstand (Mv) ist, befindet, einer angenommenen Reaktionszeit (t1) des Piloten entspricht, die gleich 5s ist, um den Piloten vor der bevorstehenden Gefahr einer Kollision zu warnen.

**16.** Verfahren nach einem der Ansprüche 1 bis 15,
**dadurch gekennzeichnet, dass** die Ausweichflugbahn keine Resourcenphase mit konstantem Lastfaktor und konstanter Geschwindigkeit aufweist.

**17.** Verfahren nach einem der Ansprüche 1 bis 16,
**dadurch gekennzeichnet, dass** das Flugzeug (100) einen Autopiloten aufweist, wobei die Ausweichflugbahn von dem Autopiloten gesteuert wird, sobald ein Alarm ausgelöst ist.

**18.** Vorrichtung (50) zur Ausgabe eines Alarms bezüglich eines Gebiets, die dazu bestimmt ist, in einem Flugzeug (100) eingebaut zu werden, wobei die Vorrichtung (50) aufweist:

- mindestens einen Rechner (51), der ein Flugbahnvorhersageprogramm ausführen kann,
- mindestens eine erste Datenbank (52) von Höhenlagen (70) in Flugbereichen des Flugzeugs (100), die mit dem Rechner (51) verbunden ist, und
- mindestens eine Alarmvorrichtung (54), die mit dem Rechner (51) verbunden ist,

**dadurch gekennzeichnet, dass** die Vorrichtung (50) das Verfahren nach einem der Ansprüche 1 bis 17 ausführen kann.

**19.** Drehflügelflugzeug (100) mit:

- mindestens einem Hauptrotor (101), der mit einer Mehrzahl von Rotorblättern versehen ist,
- einem zyklischen Steuerknüppel (103), der den zyklischen Anstellwinkel der Rotorblätter des Hauptrotors (101) steuert,
- einem kollektiven Steuerknüppel (104), der den kollektiven Anstellwinkel der Rotorblätter des Hauptrotors (101) steuert, und
- einer Mehrzahl von Sensoren (110, 111, 112), die Informationen über atmosphärische Parameter des Betriebs des Flugzeugs (100) und über Zustände des Flugzeugs (100) liefern,

**dadurch gekennzeichnet, dass** das Flugzeug (100) eine Vorrichtung (50) nach Anspruch 18 aufweist.

**Claims**

1. Method for issuing a warning in order for a rotary-wing aircraft (100) to avoid terrain, during which method, in a repeated manner:

    - at least one set (N1, N2) of possible avoidance trajectories of said aircraft (100) is developed in order to avoid a collision of said aircraft (100) with the relief (70) that is flown over by said aircraft (100) or with a potential obstacle (71),
    - a warning is triggered as soon as one of said sets (N1, N2) of possible avoidance trajectories is at a distance (D) from said relief (70) that is flown over or from said potential obstacle (71) that is less than a predetermined distance (Mv),
    - said possible avoidance trajectories being determined on the basis of a predetermined avoidance manoeuvre and current states of said aircraft (100),

    **characterised in that** said avoidance manoeuvre comprises

    - a deceleration phase (12) down to a predetermined forward speed $Va_{finale}$, said deceleration phase (12) being achieved by a predetermined nose-up attitude of said aircraft (100) and being implemented at a predetermined maximum power of said aircraft (100), and
    - a final climb phase (13) of said aircraft (100), during which the forward speed of said aircraft (100) is kept equal to said predetermined forward speed $Va_{finale}$, and the power of the engines is kept equal to said predetermined maximum power.

2. Method according to claim 1, **characterised in that** said aircraft (100) has a maximum continuous power ($MCP$), said predetermined maximum power of said aircraft (100) being said maximum continuous power ($MCP$).

3. Method according to either claim 1 or claim 2, **characterised in that** said avoidance manoeuvre comprises an initial phase (11) of returning said aircraft (100) to straight flight, which phase is implemented before said deceleration phase (12).

4. Method according to any of claims 1 to 3, **characterised in that** said deceleration phase (12) is implemented using a cyclic (103) of said aircraft (100) in order to transform some of the kinetic energy of said aircraft (100) into potential energy of said aircraft (100) during said deceleration phase (12), making it possible to increase a vertical speed $Vv$ of said aircraft (100) until said predetermined forward speed $Va_{finale}$ is achieved.

5. Method according to any of claims 1 to 4, **characterised in that** said avoidance manoeuvre is implemented using a collective (104) of said aircraft (100) in order to adjust the power developed by said aircraft (100) to a value equal to said predetermined maximum power of said aircraft (100).

6. Method according to any of claims 1 to 5, **characterised in that** said distance between each set (N1, N2) of possible avoidance trajectories and said relief (70) that is flown over or said potential obstacle (71) is in a solely vertical direction in comparison with said predetermined distance (Mv).

7. Method according to any of claims 1 to 6, **characterised in that** said possible avoidance trajectories of each set (N1, N2) constitute a fan-like envelope over a first distance d1 having a radius of curvature $R_e$ given by the equation

$$R_e = \frac{V_H{}^2}{g.tan(\varphi)}$$
,

    - $g$ being the acceleration of the Earth's gravity,
    - $\psi$ being the roll angle of the aircraft, and
    - $V_H$ being the horizontal component of the current forward speed of said aircraft (100).

8. Method according to any of claims 1 to 7, **characterised in that**, in order to determine each avoidance trajectory of said aircraft (100), the future states of said aircraft (100) are determined on the basis of states of said aircraft (100) during at least the five seconds preceding the current state of said aircraft (100).

9. Method according to any of claims 1 to 8, **characterised in that** a vertical speed $Vv$ of said aircraft (100) is determined by a formula $Vv = Vv_S(V_a, M_a, P_S, T_S, E_S) + GS\frac{Y_h}{g}$, $Vv_S(V_a, M_a, P_S, T_S, E_S)$ corresponding to a static component $Vv_{STAT}$ of said vertical speed $Vv$, said static component $Vv_{STAT}$ being derived from a table obtained on the basis of nomograms from the flight manual of said aircraft (100), and $GS\frac{Y_h}{g}$ corresponding to a dynamic component $Vv_{DYN}$ of said vertical speed $Vv$,

- $V_a$ being the forward speed of said aircraft (100) in relation to the air,
- $M_a$ being the apparent mass of said aircraft (100) such that

$$M_a = M\frac{\sqrt{g^2 + \gamma_H^2}}{g}$$,

M being the mass of said aircraft (100), $g$ being the acceleration of the Earth's gravity and $Y_H$ being the horizontal acceleration of said aircraft (100),
- $P_S$ being the static pressure around said aircraft (100),
- $T_S$ being the static temperature around said aircraft (100),
- $E_S$ being a parameter corresponding to the state of the engine(s) of said aircraft (100),
- GS being the forward speed of said aircraft in relation to the ground.

10. Method according to any of claims 1 to 9, **characterised in that** said predetermined nose-up attitude of said aircraft (100) is constant.

11. Method according to claim 10, **characterised in that** said predetermined nose-up attitude of said aircraft (100) is at 15° with respect to a horizontal plane.

12. Method according to any of claims 1 to 11, **characterised in that** said predetermined forward speed $Va_{finale}$ corresponds to a forward speed $Vy$ providing an optimum climb speed.

13. Method according to any of claims 1 to 12, **characterised in that** each set (N1, N2) of said possible avoidance trajectories corresponds to an assumption in respect of a predetermined reaction time (t1, t2) of the pilot for implementing each avoidance trajectory of said set (N1, N2).

14. Method according to claim 13, **characterised in that** a first warning is triggered when said set (N1, N2) of avoidance trajectories, at a distance (D) that is less than said predetermined distance (Mv) of said relief (70) or of said potential obstacle (71), corresponds to an assumption in respect of a reaction time (t2) of the pilot equivalent to 20s, in order to inform the pilot of the risk of said collision.

15. Method according to either claim 13 or claim 14, **characterised in that** a second warning is triggered when said set (N1, N2) of avoidance trajectories, at a distance that is less than said predetermined distance (Mv) of said relief (70) or of said potential obstacle (71), corresponds to assumption in respect of a reaction time (t1) of the pilot equivalent to 5s, in order to warn the pilot of the imminent risk of said collision.

16. Method according to any of claims 1 to 15, **characterised in that** said avoidance trajectory does not include a pull-out phase having a constant load factor and a constant velocity factor.

17. Method according to any of claims 1 to 16, **characterised in that**, said aircraft (100) comprising an autopilot, said avoidance trajectory is controlled by said autopilot as soon as a warning is triggered.

18. Device (50) for issuing a terrain warning, which device is intended to be provided in an aircraft (100), said device (50) comprising:

- at least one computer (51) capable of executing an algorithm for predicting the trajectory,
- at least a first database (52) of the relief (70) of flight zones of said aircraft (100), which database is linked to said computer (51), and
- at least one warning means (54) linked to said computer (51),

**characterised in that** said device (50) is capable of implementing the method according to any of claims 1 to 17.

19. Rotary-wing aircraft (100) comprising:

- at least one main rotor (101) provided with a plurality of blades,
- a cyclic (103) for controlling the cyclic pitch of said blades of said main rotor (101),
- a collective (104) for controlling the collective pitch of said blades of said main rotor (101), and
- a plurality of sensors (110, 111, 112) for providing information regarding atmospheric operating parameters of said aircraft (100) and regarding states of said aircraft (100), **characterised in that** said aircraft (100) comprises a device (50) according to claim 18.

# Fig.1

11
12
13

1

2

3

# Fig.2

101

102

120

130

54

52

51

110

111

112

50

53

100

104    103

# Fig.3

N2;TE2

N1;TE1

Mv

71

Z

X

TC

D

Mv

70

100

71

t1

t2

# Fig.4

C

TE1

TC

Z

X

A

B

t1

**Fig.5**

**Fig.6**

**Fig.7**

**Fig.8**

**Fig.9**

**Fig.10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2773609
- US 6380870 B
- FR 2813963
- US 6906641 B
- US 6583733 B
- US 6833797 B
- US 6683556 B
- FR 2870604
- EP 1907911 A
- WO 2007054448 A
- US 7363121 B
- FR 2932919
- US 20110125346 A
- US 2010106419 A

**Littérature non-brevet citée dans la description**

- **T ANDERSON.** Design and Implementation of Taws for Rotary Wing Aircraft. *Aerospace Conférence IEEE,* 05 Mars 2011